(19) Europäisches Patentamt
European Patent Office
Office européen des brevets

(11) **EP 0 962 341 B1**

(12) **FASCICULE DE BREVET EUROPEEN**

(45) Date de publication et mention
de la délivrance du brevet:
**11.09.2002 Bulletin 2002/37**

(51) Int Cl.[7]: **B60G 17/02**, B60G 11/16,
B60G 9/00

(21) Numéro de dépôt: **99401308.4**

(22) Date de dépôt: **01.06.1999**

(54) **Suspension pour engin agricole, tel qu'un pulvérisateur**

Radaufhängung für eine landwirtschaftliche Maschine, z.B. eine Feldspritze

Suspension for an agricultural machine, such as a field sprayer

(84) Etats contractants désignés:
**DE FR GB**

(30) Priorité: **02.06.1998 FR 9806881**

(43) Date de publication de la demande:
**08.12.1999 Bulletin 1999/49**

(73) Titulaire: **Exel Industries**
**51206 Epernay (FR)**

(72) Inventeur: **Ballu, Patrick**
**51100 Reims (FR)**

(74) Mandataire: **Colas, Jean-Pierre**
**Cabinet JP Colas**
**37, avenue Franklin D. Roosevelt**
**75008 Paris (FR)**

(56) Documents cités:
WO-A-95/28312         CH-A- 446 083
DE-A- 3 428 162       DE-A- 4 205 535
DE-A- 4 240 775       US-A- 3 589 700
US-A- 3 591 198       US-A- 4 322 088

• PATENT ABSTRACTS OF JAPAN vol. 005, no.
119 (M-081), 31 juillet 1981 (1981-07-31) & JP 56
060707 A (CHUO SPRING CO LTD), 25 mai 1981
(1981-05-25)

**Description**

La présente invention est relative à un engin roulant, notamment à usage agricole, tel qu'un pulvérisateur, et à une suspension du châssis d'un tel engin.

Il est connu de réaliser une suspension comprenant un palonnier articulé par rapport au châssis de l'engin. Classiquement, une poutre d'essieu portant les roues est fixée rigidement à une première partie du palonnier, et une deuxième partie, opposée à la première par rapport à l'articulation du palonnier, vient comprimer des ressorts ou autres organes élastiques. De telles suspensions sont par exemple décrites dans DE 42 40 775 A, WO 95 28 312 A ou CH 446 083 A. La présentation en deux parties de la revendication 1 est basée sur un de ces documents.

En adaptant les longueurs respectives des deux parties du palonnier de manière à créer un effet de levier, on peut utiliser des organes élastiques dont la raideur est élevée et la course très faible. On limite ainsi l'encombrement de la suspension.

Toutefois, les suspensions du type à palonnier de la technique antérieure présentent l'inconvénient d'avoir une fréquence propre d'oscillation qui varie avec la charge de l'engin roulant.

Ainsi, lorsque qu'un engin à charge variable circule sur un sol qui lui impose en moyenne une certaine fréquence d'oscillation, sa suspension risque d'entrer en résonance lorsque sa charge atteint une certaine valeur critique.

C'est le cas notamment pour un pulvérisateur agricole, dont la charge varie considérablement au cours d'une opération d'épandage. Lorsque cette charge atteint ladite valeur critique, le pulvérisateur risque d'être soumis à des oscillations de forte amplitude, particulièrement préjudiciables tant à la qualité de l'épandage qu'aux rampes de pulvérisation elles-mêmes.

La présente invention a pour but de fournir une suspension du type à palonnier qui ne présente pas ces inconvénients.

On atteint ce but de l'invention, ainsi que d'autres qui apparaîtront à la lecture de ce qui va suivre, avec un engin roulant, notamment à usage agricole, tel qu'un pulvérisateur, comprenant un châssis, des moyens de roulement sur lesquels est monté ledit châssis et, interposée entre celui-ci et lesdits moyens de roulement, une suspension comportant au moins un palonnier qui est monté en libre rotation sur ledit châssis autour d'un axe transversal à la direction d'avancement de l'engin et auquel sont fixés des moyens de support desdits moyens de roulement qui exercent sur ledit palonnier un premier couple dans un premier sens de rotation autour dudit axe, cette suspension comportant également des moyens élastiques coopérant respectivement avec ledit châssis et avec ledit palonnier pour exercer sur celui-ci un deuxième couple dans un deuxième sens de rotation autour dudit axe opposé audit premier sens, remarquable en ce qu'en l'absence de charge sur ledit engin roulant, le bras de levier dudit premier couple est maximal et le bras de levier dudit deuxième couple est minimal.

Grâce à ces caractéristiques, une augmentation de la charge de l'engin roulant entraîne une diminution du bras de levier dudit premier couple et une augmentation du bras de levier dudit deuxième couple. On obtient ainsi une suspension du type à palonnier dont la raideur croît avec la charge de l'engin, ce qui rend la fréquence propre d'oscillation de cette suspension à peu près indépendante de cette charge.

Suivant d'autres caractéristiques de l'engin roulant selon l'invention :

- lesdits moyens de support et lesdits moyens de roulement forment au moins un train de deux roues à essieu rigide;
- ledit palonnier a sensiblement la forme d'un cadre rectangulaire dont les deux côtés transversaux à la direction d'avancement sont constitués par une poutre-charnière permettant l'articulation dudit palonnier par rapport audit châssis et par une poutre d'essieu supportant lesdites deux roues;
- lesdits moyens de support et lesdits moyens de roulement forment au moins un train de deux roues indépendantes, et ladite suspension est associée de façon indépendante à chacune desdites deux roues;
- au moins l'un desdits moyens de roulement est directeur;
- lesdits moyens élastiques sont interposés entre un premier étrier mobile monté rotatif sur ledit palonnier et un deuxième étrier mobile monté rotatif sur ledit châssis.

D'autres caractéristiques et avantages de la présente invention apparaîtront à la lecture de la description qui va suivre et à l'examen du dessin annexé donné uniquement à titre d'exemple, et dans lequel :

- la figure 1 est une vue en perspective de l'arrière du châssis d'un engin selon l'invention, l'une des roues de cet engin ayant été ôtée;
- la figure 2 est une vue en coupe selon la ligne II-II de la figure 1 lorsque l'engin est à vide;
- la figure 3 est une vue en coupe analogue à la figure 2 lorsque l'engin est en pleine charge.

Sur ces figures, le sens d'avancement de l'engin est choisi comme étant vers la gauche.

Comme on peut le voir sur ces figures, le châssis 1 de l'engin selon l'invention comprend typiquement deux longerons 2, 3 reliés entre eux par une série de traverses 4, 5.

Ce châssis est destiné à supporter différents ensembles. Dans le mode de réalisation représenté, il supporte une cuve 6 destinée à contenir du liquide phytosanitaire, par exemple destiné à être pulvérisé sur la végétation d'un champ.

L'extrémité arrière du châssis 1 comporte deux paliers 7, 8 supportant un palonnier 9 monté en libre rotation par rapport au châssis autour d'un axe transversal à la direction d'avancement de l'engin.

Selon un mode de réalisation possible et représenté, le palonnier 9 a sensiblement la forme d'un cadre rectangulaire dont les deux côtés transversaux à la direction d'avancement sont constitués par une poutre-charnière 10 et par une poutre d'essieu 11.

La poutre-charnière 10 permet l'articulation du palonnier 9 par rapport au châssis 1.

La poutre d'essieu 11 supporte deux moyens de roulement tels que des roues non directrices, dont une seule 12 est visible sur les figures du dessin annexé.

Un premier étrier fixe 13 pointant vers le haut est placé sensiblement au milieu de la poutre d'essieu 11.

Un premier étrier mobile 14 est monté en libre rotation à l'intérieur du premier étrier fixe 13.

De même, un deuxième étrier fixe 15 pointant vers l'arrière du châssis 1 est placé sensiblement au milieu d'une traverse 4 située à proximité de l'arrière du châssis.

Un deuxième étrier mobile 16 est monté en libre rotation à l'intérieur du deuxième étrier fixe 15.

Un organe élastique 17 compact et à raideur élevée est interposé entre le premier étrier mobile 14 et le deuxième étrier mobile 16.

Dans le mode de réalisation représenté, l'organe élastique 17 est un ressort hélicoïdal, mais il est évident que tout autre moyen équivalent, comme par exemple un ressort à air, pourrait convenir.

En outre, au moins un, et de préférence deux amortisseurs 18, 19 sont interposés entre la poutre d'essieu 11 et le châssis 1.

Le palonnier 9 est ainsi soumis à deux couples de rotation antagonistes :

- le premier couple est dû à la réaction du sol S,
- le deuxième couple est dû à la réaction de l'organe élastique 17.

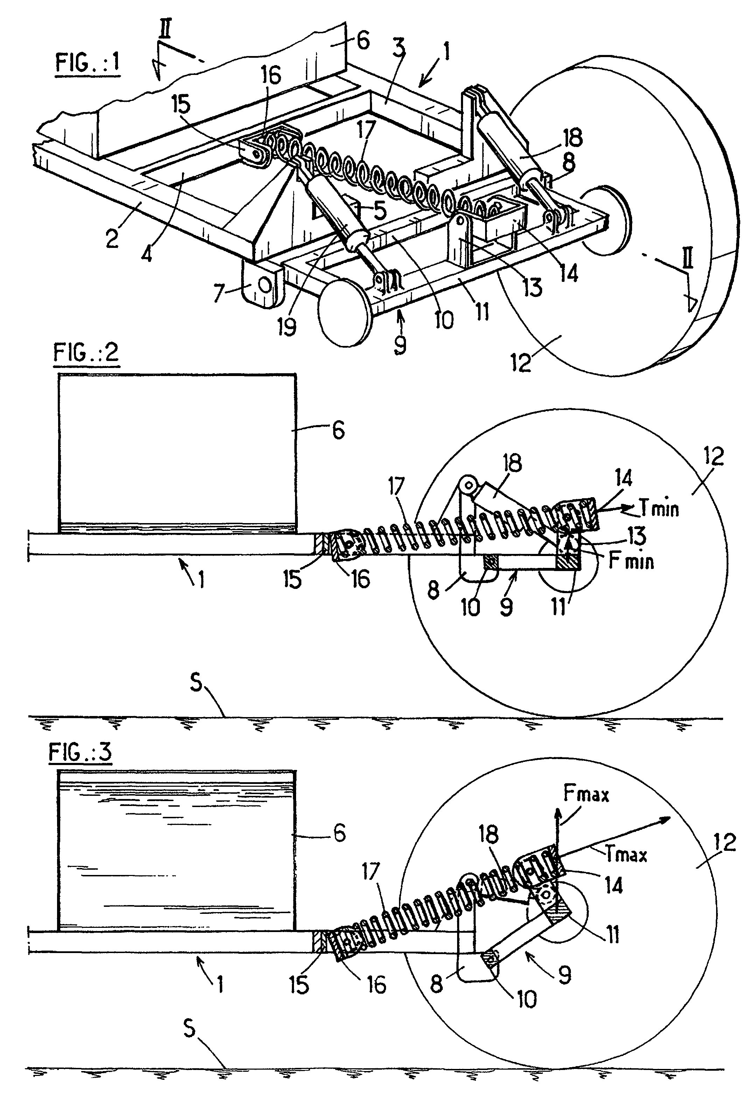

Lorsque la charge de l'engin selon l'invention augmente, c'est à dire en l'espèce lorsque l'on remplit la cuve 6 (voir figures 2 et 3):

- la réaction du sol S sur le palonnier 9 croit d'une valeur minimale Fmin jusqu'à une valeur maximale Fmax,
- la réaction de l'organe élastique 17 croît d'une valeur minimale Tmin jusqu'à une valeur maximale Tmax.

La géométrie de la suspension de l'engin selon l'invention et la raideur de l'organe élastique 17 sont telles que :

- lorsque la cuve 6 est sensiblement vide (figure 2), le palonnier 9 est à peu près horizontal,
- lorsque la cuve 6 est sensiblement pleine (figure 3), la distance séparant l'axe de rotation du palonnier 9 de l'axe de l'organe élastique 17 est maximale.

Dans ces conditions, lorsqu'on remplit la cuve 6 :

- le bras de levier du couple de réaction du sol S sur le palonnier 9 décroît,
- le bras de levier du couple de réaction de l'organe élastique 17 sur le palonnier 9 croît.

Ainsi le couple de réaction du sol S sur le palonnier 9 croît moins vite que la charge sur l'essieu, puisque le bras de levier diminue, et le couple de réaction appliqué par l'organe élastique 17 croît lui aussi moins vite que ce couple puisque le bras de levier correspondant augmente.

L'effort appliqué par l'organe élastique 17 au palonnier 9 augmente donc beaucoup moins vite que la charge sur l'essieu.

On obtient ainsi une suspension qui devient de plus en plus dure au fur et à mesure que la charge de l'engin selon l'invention augmente.

Sachant que, d'une manière générale, la fréquence propre d'oscillation $N_0$ d'un système élastique de raideur K et de masse M est donnée par la formule :

$$N_0 = 2\pi \sqrt{\frac{M}{K}},$$

on comprend qu'une augmentation conjointe de la dureté de la suspension, c'est à dire de sa raideur, avec la charge de l'engin, permet d'obtenir une fréquence propre d'oscillation à peu près constante.

A titre indicatif, un prototype de suspension réalisé selon les préceptes de l'invention a permis de limiter l'augmentation relative de sa fréquence propre d'oscillation à 8% pour un triplement de la masse de la charge de l'engin.

Dans les mêmes conditions, la fréquence propre d'oscillation d'une suspension classique aurait augmenté d'environ 70%.

Les faibles variations de fréquence propre obtenues grâce à la suspension de l'invention permettent d'adapter la raideur de l'organe élastique 17 de manière à éviter les phénomènes de résonance quelle que soit la charge de l'engin roulant. Dans le cas d'un pulvérisateur agricole, cela permet de garder le même réglage des rampes de pulvérisation pendant toute la durée de l'épandage.

En dehors de cet avantage principal, on pourra également remarquer que la présente invention permet de placer l'organe élastique 17 de sorte qu'il évolue dans une zone située au dessus du châssis de l'engin, évitant ainsi les problèmes d'encrassement classiquement rencontrés dans les suspensions d'engins agricoles.

Bien entendu, l'invention n'est pas limitée au mode de réalisation décrit et représenté qui n'a été donné qu'à titre d'exemple.

C'est ainsi par exemple que l'on pourrait fixer le premier étrier fixe 13 et le premier étrier mobile 14 sur la poutre-charnière 10 plutôt que sur la poutre d'essieu 11.

C'est ainsi également que l'on pourrait modifier la géométrie de la suspension de l'engin selon l'invention de sorte que l'organe élastique 17 puisse fonctionner en traction.

C'est ainsi également que l'on pourrait monter plusieurs organes élastiques en parallèle entre le palonnier 9 et le châssis 1.

C'est ainsi également que la suspension de l'engin selon l'invention pourrait être associée de façon indépendante à chacune des deux roues d'un train de deux roues indépendantes.

C'est ainsi encore que la suspension de l'engin selon l'invention pourrait être associée à des moyens de roulement directeurs.


**Revendications**

1. Engin roulant, notamment à usage agricole, tel qu'un pulvérisateur, comprenant un châssis (1), des moyens de roulement (12) sur lesquels est monté ledit châssis et, interposée entre celui-ci et lesdits moyens de roulement (12), une suspension comportant au moins un palonnier (9) qui est monté en libre rotation sur ledit châssis (1) autour d'un axe transversal à la direction d'avancement de l'engin et auquel sont fixés des moyens de support (11) desdits moyens de roulement (12) qui exercent sur ledit palonnier (9) un premier couple dans un premier sens de rotation autour dudit axe, cette suspension comportant également des moyens élastiques (17) coopérant respectivement avec ledit châssis (1) et avec ledit palonnier (9) pour exercer sur celui-ci un deuxième couple dans un deuxième sens de rotation autour dudit axe opposé audit premier sens, **caractérisé en ce qu'**en l'absence de charge sur ledit engin roulant, le bras de levier dudit premier couple est maximal et le bras de levier dudit deuxième couple est minimal.

2. Engin roulant selon la revendication 1, **caractérisé en ce que** lesdits moyens de support (11) et lesdits moyens de roulement (12) forment au moins un train de deux roues à essieu rigide.

3. Engin roulant selon la revendication 2, **caractérisé en ce que** ledit palonnier (9) a sensiblement la forme d'un cadre rectangulaire dont les deux côtés transversaux à la direction d'avancement sont constitués par une poutre-charnière (10) permettant l'articulation dudit palonnier (9) par rapport audit châssis (1) et par une poutre d'essieu (11) supportant lesdites deux roues (12).

4. Engin roulant selon la revendication 1, **caractérisé en ce que** lesdits moyens de support (11) et lesdits moyens de roulement (12) forment au moins un train de deux roues indépendantes, et **en ce que** ladite suspension est associée de façon indépendante à chacune desdites deux roues.

5. Engin roulant selon l'une quelconque des revendications précédentes, **caractérisé en ce qu'**au moins l'un desdits moyens de roulement est directeur.

6. Engin roulant selon l'une quelconque des revendications précédentes, **caractérisé en ce que** lesdits moyens élastiques (17) sont interposés entre un premier étrier mobile (14) monté rotatif sur ledit palonnier (9) et un deuxième étrier mobile (16) monté rotatif sur ledit châssis (1).

7. Engin roulant selon la revendication 6, **caractérisé en ce que** ledit premier étrier mobile (14) est monté rotatif à l'intérieur d'un premier étrier fixe (13) placé sur ledit palonnier (9) et pointant vers le haut, et **en ce que** ledit deuxième étrier mobile (16) est monté rotatif à l'intérieur d'un deuxième étrier fixe (15) placé sur une traverse (4) située à proximité de l'arrière dudit châssis (1) et pointant vers l'arrière de ce châssis.

8. Engin roulant selon l'une des revendications 6 ou 7 lorsqu'elles dépendent de la revendication 3, caractérisé en que ledit premier étrier mobile (14) est monté rotatif sur ladite poutre d'essieu (11).

9. Engin roulant selon l'une des revendications 6 ou 7 lorsqu'elles dépendent de la revendication 3, caractérisé en que ledit premier étrier mobile est monté rotatif sur ladite poutre-charnière (10).

10. Engin roulant selon l'une quelconque des revendications précédentes, **caractérisé en ce que** lesdits moyens élastiques (17) comprennent un ou plusieurs ressorts hélicoïdaux.

11. Engin roulant selon l'une quelconque des revendications précédentes, **caractérisé en ce que** lesdits moyens élastiques (17) sont placés de manière à évoluer au dessus du châssis (1) dudit engin.

## Claims

1. Wheeled machine, in particular for agricultural use, such as a sprayer, including a chassis (1), wheel means (12) on which said chassis is mounted and, between the latter and said wheel means (12), a suspension including at least one swing-arm (9) which is mounted to rotate freely on said chassis (1) about an axis transverse to the direction of movement of the machine and to which are fixed means (11) for supporting said wheel means (12) which exert on said swing-arm (9) a first torque in a first direction of rotation about said axis, said suspension also including spring means (17) respectively co-operating with said chassis (1) and with said swing-arm (9) to exert on the latter a second torque in a second direction of rotation about said axis opposite to said first direction, **characterized in that** the lever arm of said first torque is a maximum and the lever arm of said second torque is a minimum in the absence of any load on said wheeled machine.

2. Wheeled machine according to claim 1, **characterized in that** said support means (11) and said wheel means (12) form at least one train comprising two wheels and a rigid axle.

3. Wheeled machine according to claim 2, **characterized in that** said swing-arm (9) is substantially in the form of a rectangular frame with two sides transverse to the direction of movement constituted by a hinge-beam (10) articulating said swing-arm (9) to said chassis (1) and an axle beam (11) supporting said two wheels (12).

4. Wheeled machine according to claim 1, **characterized in that** said support means (11) and said wheel means (12) form at least one train comprising two independent wheels and **in that** said suspension is associated independently with each of said two wheels.

5. Wheeled machine according to any preceding claim, **characterized in that** at least one of said wheel means constitutes steering wheel means.

6. Wheeled machine according to any preceding claim, **characterized in that** said spring means (17) are disposed between a first mobile bracket (14) rotatably mounted on said swing-arm (9) and a second mobile bracket (16) rotatably mounted on said chassis (1).

7. Wheeled machine according to claim 6, **characterized in that** said first mobile bracket (14) is rotatably mounted inside a first fixed bracket (13) disposed on said swing-arm (9) and pointing upwards and **in that** said second mobile bracket (16) is rotatably mounted inside a second fixed bracket (15) disposed on a crossmember (4) near a rear end of said chassis (1) and pointing towards the rear of the chassis.

8. Wheeled machine according to either claim 6 or claim 7 when dependent on claim 3, **characterized in that** said first mobile bracket (14) is rotatably mounted on said axle beam (11).

9. Wheeled machine according to either claim 6 or claim 7 when dependent on claim 3, **characterized in that** said first mobile bracket is rotatably mounted on said hinge-beam (10).

10. Wheeled machine according to any preceding claim, **characterized in that** said spring means (17) include one or more coil springs.

11. Wheeled machine according to any preceding claim, **characterized in that** said spring means (17) are disposed above the chassis (1) of said machine.

## Patentansprüche

1. Fahrbares Gerät, insbesondere für landwirtschaftliche Benutzung, so wie ein Sprühapparat, mit einem Fahrgestell (1), Mitteln zum Rollen (12), auf denen das Fahrgestell angebracht ist, wobei sich zwischen diesem und den Mitteln zum Rollen (12) eine Aufhängung befindet, die zumindest einen Lenker (9) aufweist, der frei drehbar auf dem Fahrgestell (1) um eine quer zur Vorwärtsbewegung des Gerätes gerichtete Achse gelagert ist und an dem Mittel zum Tragen (11) der Mittel zum Rollen (12) befestigt sind, die auf den Lenker (9) ein erstes Moment in einem ersten Drehsinn um die Achse ausüben, wobei die Aufhängung auch elastische Mittel (17) aufweist, die jeweils mit dem Fahrgestell (1) und dem Lenker (9) zusammenwirken, um auf diesen ein zweites Moment in einem zweiten Drehsinn um die Achse entgegen dem ersten Drehsinn auszuüben, **dadurch gekennzeichnet, daß** in Abwesenheit einer Belastung des fahrbaren Gerätes der Hebelarm des ersten Momentes maximal und der Hebelarm des zweiten Momentes minimal ist.

2. Fahrbares Gerät nach Anspruch 1, **dadurch gekennzeichnet, daß** die Mittel zum Tragen (11) und die Mittel zum Rollen (12) zumindest ein Fahrwerk mit zwei Rädern an einer Starrachse bilden.

3. Fahrbares Gerät nach Anspruch 2, **dadurch gekennzeichnet, daß** der Lenker (9) im wesentlichen die Form eines rechteckigen Rahmens aufweist, wovon die beiden quer zur Vorwärtsbewegung gerichteten Seiten von einem Drehgelenk-Träger (10), der das Schwenken des Lenkers (9) bezüglich des Fahrgestells (1) ermöglicht, und von einem die beiden Räder (12) tragenden starren Träger (11) gebildet sind.

**4.** Fahrbares Gerät nach Anspruch 1, **dadurch gekennzeichnet, daß** die Mittel zum Tragen (11) und die Mittel zum Rollen (12) zumindest ein Fahrwerk mit zwei unabhängigen Rädern bilden, und daß die Aufhängung unabhängig mit jedem der beiden Räder verbunden ist.

**5.** Fahrbares Gerät gemäß irgendeinem der vorstehenden Ansprüche, **dadurch gekennzeichnet, daß** zumindest eines der Mittel zum Rollen führend ist.

**6.** Fahrbares Gerät gemäß irgendeinem der vorstehenden Ansprüche, **dadurch gekennzeichnet, daß** sich die elastischen Mittel (17) zwischen einem ersten beweglichen Bügel (14), der drehbar auf dem Lenker (9) angeordnet ist, und einem zweiten beweglichen Bügel (16), der drehbar auf dem Fahrgestell (1) angeordnet ist, befinden.

**7.** Fahrbares Gerät nach Anspruch 6, **dadurch gekennzeichnet, daß** der erste bewegliche Bügel (14) drehbar innerhalb eines ersten festen Bügels (13) angeordnet ist, der auf dem Lenker (9) plaziert ist und nach oben weist, und daß der zweite bewegliche Bügel (16) drehbar im Inneren eines zweiten festen Bügels (15) angeordnet ist, der auf einer Traverse (4) plaziert ist, die sich in der Nähe des Hinterteils des Fahrgestells (1) befindet und von diesem Fahrgestell nach hinten weist.

**8.** Fahrbares Gerät nach einem der Ansprüche 6 oder 7, soweit sie von Anspruch 3 abhängen, **dadurch gekennzeichnet, daß** der erste bewegliche Bügel (14) drehbar auf dem starren Träger (11) angeordnet ist.

**9.** Fahrbares Gerät gemäß einem der Ansprüche 6 oder 7, soweit sie von Anspruch 3 abhängen, **dadurch gekennzeichnet, daß** der erste bewegliche Bügel drehbar auf dem Drehgelenk-Träger (10) angeordnet ist.

**10.** Fahrbares Gerät gemäß irgendeinem der vorstehenden Ansprüche, **dadurch gekennzeichnet, daß** die elastischen Mittel (17) eine oder mehrere Schraubenfedern aufweisen.

**11.** Fahrbares Gerät gemäß irgendeinem der vorstehenden Ansprüche, **dadurch gekennzeichnet, daß** die elastischen Mittel (17) so angeordnet sind, daß sie ihre Bewegungen oberhalb des Fahrgestelles (1) des Gerätes ausführen.

FIG.:1

FIG.:2

FIG.:3